# EUROPEAN PATENT APPLICATION

(11) **EP 4 610 879 A1**
(43) Date of publication of application: **03.09.2025**
(21) Application number: 24204180.4
(22) Date of filing: 02.10.2024
(51) Int. Cl.: G06F 40/30, G06N 3/045, G06N 20/00

(54) **DATASET ENCODING USING GENERATIVE ARTIFICIAL INTELLIGENCE**

(30) Priority: 27.02.2024 US 202418589099
(71) Applicant: Fujitsu Limited, Kawasaki-shi, Kanagawa 211-8588 (JP)
(72) Inventor: BAHRAMI, Mehdi, Sunnyvale, California, 94085 (US); CHEN, Wei-Peng, Sunnyvale, California, 94085 (US)
(74) Representative: Hoffmann Eitle

(57) **Abstract**

Operations may include identifying features corresponding to a dataset. An embedding for each feature may be obtained using a pretrained generative artificial intelligence model. Pair comparisons of the embeddings may be generated. An encoded dataset may be generated by applying, to the pair comparisons, weights computed using the pretrained generative artificial intelligence model. The weights may indicate correlation between features in the pair comparisons.

## Description

### FIELD

The present disclosure generally relates to using generative artificial intelligence to encode datasets for a machine learning model.

### BACKGROUND

Machine learning (ML) generally employs ML models that are trained with a training dataset to make predictions that become more accurate with ongoing training. The quality and dimensionality of the training dataset affects the accuracy and the reality of the predictions made by ML models. ML may be used in a wide variety of applications including, but not limited to, housing market predictions, web searching, online fraud detection, medical diagnosis, speech recognition, email filtering, image recognition, virtual personal assistants, and automatic translation.

The subject matter claimed in the present disclosure is not limited to embodiments that solve any disadvantages or that operate only in environments such as those described above. Rather, this background is only provided to illustrate example technology areas where some embodiments described in the present disclosure may be practiced.

### SUMMARY

According to an aspect of an embodiment, operations may include identifying features corresponding to a dataset. A pretrained generative artificial intelligence model may obtain an embedding for each of the features (e.g., a feature embedding). Additionally, pair comparisons of the embeddings may be generated. An encoded dataset may be generated by applying weights computed using the pretrained generative artificial intelligence model to the pair comparisons of the embeddings for each of the features identified in the dataset.

The objects and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 illustrates an example process to encode a dataset;
FIG. 2A illustrates an example system to encode a dataset;
FIG. 2B illustrates an example encoded dataset;
FIG. 3 illustrates an example process to encode a dataset used to train a machine learning model;
FIG. 4 illustrates a flowchart of an example method of encoding a dataset using generative artificial intelligence; and
FIG. 5 is an example computing system, all in accordance with one or more embodiments of the present disclosure.

### DETAILED DESCRIPTION

Machine learning (ML) models may be trained using a training dataset to make predictions. The training dataset may include training instances or individual data points used to train the ML model. Individual data points may correspond to features and one or more target variables that the ML model may be designed to predict. The features may define the characteristics of the data that the ML model may use to make predictions. The features may include various data types such as numerical, categorical, and/or text-based, among others. The features may be included in one or more headers related to the dataset, such as in column headers of a tabular dataset.

In some embodiments, encoding the training dataset using generative artificial intelligence (AI) may improve the accuracy and/or efficiency of identifying features in a tabular dataset and/or generating pair comparisons of features compared to the traditional approach of having one or more humans (e.g., data scientists/feature engineers/domain experts) manually encode datasets. For example, using the generative AI to encode the training dataset may reduce human bias/error.

In some instances, encoding the training dataset may improve the training of the ML model and the ML model's ability to make accurate predictions, such as in situations where the training dataset is represented with a set of additional features suitable for a ML model. For instance, the training dataset may be represented in a tabular format having multiple columns and rows. In such instances, the columns may represent features of the training dataset, and the rows may represent individual instances or data points of the features.ML models (e.g., deep ML models) generally perform better with unstructured data such as image data because a wide range of known representations and pre-trained models may be available. However, unlike image data, there is no well-known representation and/or pre-trained models for tabular data. Some issues that may cause this lack of well-known representations and/or pre-trained models may be challenges associated with the tabular data such as lack of locality, data sparsity, mixed feature types, and/or lack of knowledge of dataset structure. Encoding a training dataset that is a tabular dataset may improve the training of ML models on tabular datasets and/or the ability of ML models to make accurate predictions of target variables related to tabular datasets.

The present disclosure may relate to, among others, a system and a method related to encoding a training dataset using generative AI. Encoding the training dataset may improve the training dataset for use in training a ML model by enhancing, such as by adding, additional features to the training dataset and by determining correlations between features in the training dataset.

In some embodiments, encoding the training dataset may include using the generative AI to increase the dimensionality of the features in the training dataset to improve variability of the training dataset through embedding, such as word embedding or contextual embedding. Further, encoding the training dataset may include applying weights to pair comparisons of embeddings generated for each feature in the training dataset using generative AI.

Encoding the training dataset using generative AI (e.g., a pretrained generative AI model) may improve scope and comprehensiveness of the training dataset. As a result, the ML models generated using the training dataset may be improved. For example, the ML models may be more robust and more accurately predict a target variable.

Embodiments of the present disclosure are explained with reference to the accompanying figures.

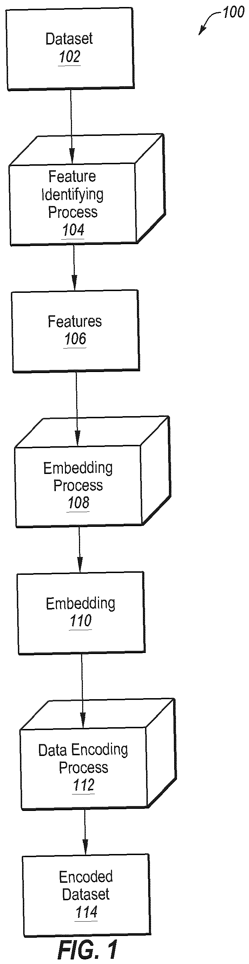

FIG. 1 illustrates an example process 100 configured to generate an encoded dataset 114 using a dataset 102, in accordance with one or more embodiments of the present disclosure. In some embodiments, the process 100 may include a feature identifying process 104, an embedding process 108, and a data encoding process 112.

In some embodiments, the dataset 102 may include any suitable type of data to be analyzed. For example, the dataset 102 may include electronic data. In some embodiments, the dataset 102 may be a training dataset used to train a ML model. The dataset 102 may be obtained from any source or constructed using any data compilation technique. The dataset 102 may include numerical data, character strings that include characters, such as letters, symbols, or other characters, numbers, or a combination of numbers and characters, and/or other types of data.

In some embodiments, the dataset 102 may be represented or stored as a set of tabular data. For example, the data included in the dataset 102 may be stored in columns and rows. In some instances, the columns may represent categories of information. For example, column headers may identify categories of information contained in corresponding columns where each column may include a different category of information. In some embodiments, the columns may represent the features 106 of the dataset 102 and each of the rows may include values in one or more of the columns. In these and other embodiments, the rows may represent an instance of data. For example, each row may include a single data entry that may be characterized by corresponding values in the categories of information represented by the columns. In some embodiments, the values in one of the rows may be associated together. For example, the values for each of the columns in a single row may be associated with the same real estate listing.

In some embodiments, the dataset 102 may be stored in one or more databases. In some embodiments, the dataset 102 may include public data. For example, the dataset 102 may include housing market data. In some embodiments, the dataset 102 may include public data used in one or more existing ML projects. Additionally or alternatively, the dataset 102 may include private data. For example, the private data may include protected health information. In these and other embodiments, a part of the process 100 may be performed using on-premises servers of customers owning or controlling the private data. For example, the on-premises servers may enhance confidentiality of private data included as part of the dataset 102.

In some embodiments, the dataset 102 may include one or more features 106. The features 106 may be characterizations of the dataset 102. For example, the features 106 may include one or more of a number/quantity of rows, a number/quantity of columns, the presence or absence of a value, the presence of missing values, the presence of a number category, the presence of a string category, the presence of text, a mean, a median, a mode, a distribution, a maximum value, a minimum value, a label or title for categories of information, and/or any other characterization. In some embodiments, the features 106 may include any suitable categorical description of data within the dataset 102. For example, the features 106 may be text-based data included in column headers. In some embodiments, the features 106 may be nondescriptive of the dataset 102. In these and other embodiments, nondescriptive may refer to not carrying significance or conveying meaningful content in a particular context. For example, features 106 extracted from column headers including "Feature 1", "Feature 2", "Feature 3", etc. may be nondescriptive of the dataset 102. Additionally or alternatively, the dataset 102 may be organized based on one or more features 106 that are descriptive of the dataset 102. For example, the dataset 102 may include real estate data corresponding to City, Square Footage, and Year Built, wherein City, Square Footage, and Year Built are each one of the features 106.

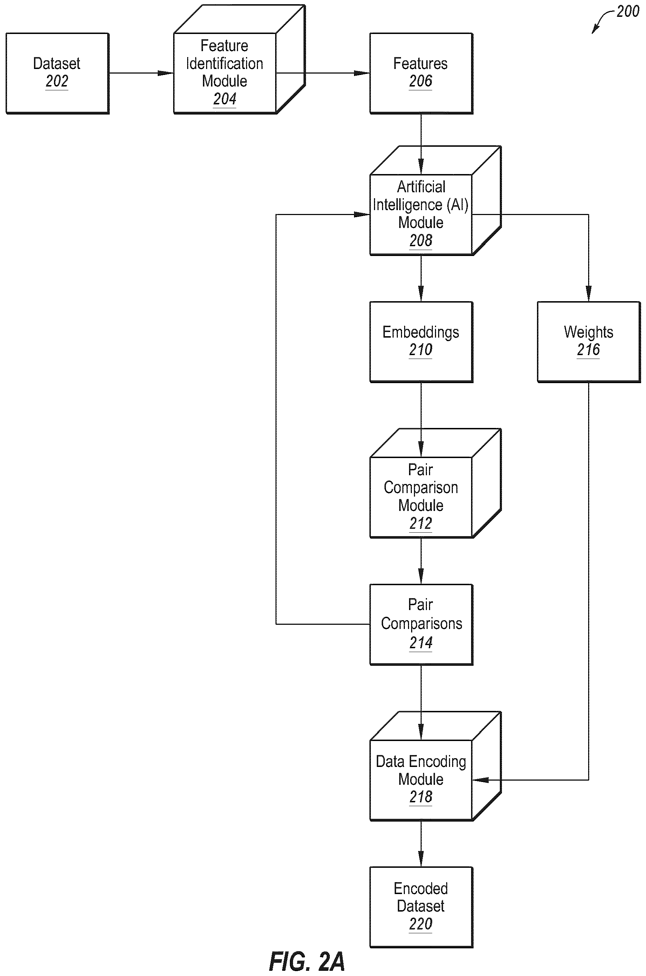

In some embodiments, the feature identifying process 104 may include obtaining the dataset 102. Additionally or alternatively, the feature identifying process 104 may include identifying the features 106 included in the dataset 102. For instance, the dataset 102 may include tabular data and the features 106 may be the data included in the column headers of the dataset 102. In some embodiments, the feature identifying process 104 may be performed by a feature identification module, such as a feature identification module 204 described in further detail below with respect to FIG. 2A.

In some embodiments, the embedding process 108 may include generating embeddings 110 of the features 106 in which the embeddings 110 are vector representations of the features 106 such that the similarity between each of the features 106 is represented numerically. In some instances, the embeddings 110 may be generated as numerical representations of the features 106 such that ML models may utilize the features 106 in ML model training and/or perform one or more operations on the features 106. In these and other embodiments, the embedding process 108 may include encoding the features 106 with additional information such that each of the features 106 is represented by multiple numerical elements (dimensions). In some embodiments, the embeddings 110 may be high-dimensional vector representations of the features 106. For example, the embeddings 110 may include 100, 1,000, or more dimensions for each of the features 106. In some embodiments, the additional information may include information about the semantic similarity of each of the features 106 compared to each of the other features 106, wherein semantic similarity may indicate the relatedness of two or more words, sentences, and/or phrases contained in a feature based on whether the words, sentences, and/or phrases have similar meanings and/or often appear in similar contexts. In these and other embodiments, the additional information may be represented as additional dimensions contained in the embeddings 110. In some instances, the additional information may be generated using word embedding and/or contextual embedding. For example, word embedding techniques such as Word2Vec and/or Global Vectors for Word Representation (GloVe) and/or contextual embedding techniques such as Embeddings from Language Models (ELMo) and/or Bidirectional Encoder Representations from Transformers (BERT) may encode the features 106 with additional information indicating semantic similarity. In some embodiments, the additional information may be represented in the embeddings 110 as one or more numerical elements included in the embeddings 110. In some embodiments, the embedding process 108 may be performed by an AI module, such as an AI module 208 described in further detail below with respect to FIG. 2A.

In some embodiments, the data encoding process 112 may include generating the encoded dataset 114 using the embeddings 110. In some instances, the data encoding process 112 may include using generative AI to generate weights and apply the weights to pair comparisons of the embeddings 110, such as in the system 200 described in further detail below with respect to FIG. 2A. For example, the data encoding process 112 may be performed by a data encoding module, such as a data encoding module 218 described in further detail below with respect to FIG. 2A.

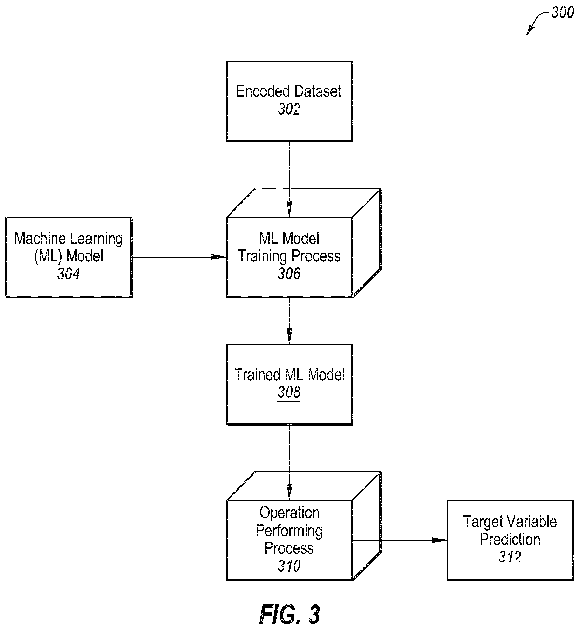

In some embodiments, the encoded dataset 114 may be a representation of the dataset 102 such that each of the features 106 in the dataset 102 has been weighted based on pair comparisons of the embeddings 110. In some embodiments, the encoded dataset 114 may be a training dataset that may be used to train a ML model such as an ML model 304 described in further detail below with respect to FIG. 3. For instance, the encoded dataset 114 may include data suitable to train the ML model to perform one or more operations such as the operation performing process 310 described in further detail below with respect to FIG. 3.

Modifications, additions, or omissions may be made to the process 100 without departing from the scope of the present disclosure. For example, in some embodiments, the process 100 may include any number of other components that may not be explicitly illustrated or described.

FIG. 2A illustrates an example system 200 configured to generate an encoded dataset 220 using a dataset 202, in accordance with one or more embodiments of the present disclosure. In some embodiments, the system 200 may include a feature identification module 204, an AI module 208, a pair comparison module 212, and a data encoding module 218, which may be generally referred to as "the modules." Additionally or alternatively, in some embodiments, the system 200 may perform one or more operations of the process 100 described with respect to FIG. 1.

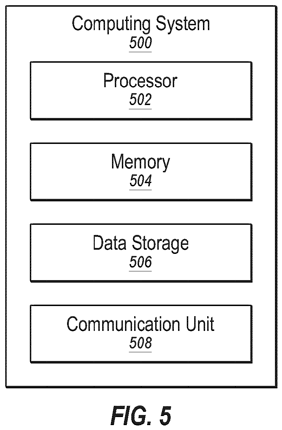

In some embodiments, one or more of the modules may include code and routines configured to allow a computing system to perform one or more operations. Additionally or alternatively, one or more of the modules may be implemented using hardware including one or more processors, central processing units (CPUs), graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), and/or other processor types. In these and other embodiments, one or more of the modules may be implemented using a combination of hardware and software. In the present disclosure, operations described as being performed by a particular module may include operations that the particular module may direct a corresponding computing system to perform. In these and other embodiments, one or more of the modules may be implemented by one or more computing systems, such as that described in further detail with respect to FIG. 5.

In some embodiments, the dataset 202 may be analogous or similar to the dataset 102 described with respect to FIG. 1 above. Additionally or alternatively, in some embodiments, the features 206 may be analogous or similar to the features 106 described with respect to FIG. 1 above.

In some embodiments, the features 206 of the dataset 202 may be identified by the feature identification module 204. For example, the feature identification module 204 may be configured to identify that the features 206 are the column names of the tabular data in the dataset 202. In some instances, the feature identification module 204 may also extract the features 206 identified by the feature identification module 204. In these and other embodiments, the feature identification module 204 may categorize the features 206 based on the type of data included in each of the features 206. For example, the feature identification module 204 may categorize the features 206 based on the features 206 including categorical variables (e.g., text-based features), identifier (ID)-style features (e.g., numerical IDs, alphanumeric codes, etc.), and/or other types of data. In some embodiments, the feature identification module 204 may be configured to send one or more identified and/or extracted features 206 to the AI module 208.

In some embodiments, the AI module 208 may be configured to command a generative AI model to generate embeddings 210 to enhance the features 206 with additional information generated based on the dataset 202. For example, the AI module 208 may be configured to command a large language model (LLM) such that the AI module 208 may be able to obtain (learn) connections between words, sentences, and/or phrases that may be useful for generating the embeddings 210.

In some embodiments, the AI module 208 may be configured to generate embeddings 210 with size *n* dimensions, wherein *n* may be selected by a user and/or by the AI module 208 itself. In these and other embodiments, the dimensions of the embeddings 210 may be based on resource constraints such as limited data processing capabilities of the AI module 208, time limitations of a user, and/or any other basis.

In some embodiments, the pair comparison module 212 may be configured to obtain the embeddings 210 and to generate a set of one or more pair comparisons 214 of the embeddings 210. For example, based on having obtained {[*Emb(f*₁)], [*Emb*(*f*₂)], [*Emb(f*₃)]} embeddings 210 representing {*f*₁, *f*₂, *f*₃} features 206, the pair comparison module 212 may generate {[*Emb*(*f*₁)*, Emb*(*f*₂)], [*Emb*(*f₁*), *Emb*(*f*₃)], [*Emb*(*f*₂), *Emb*(*f*₃)]} as pairs for the pair comparisons 214. In some embodiments, generating the pair comparisons 214 may include one or more calculations of correlation between the embeddings 210. For example, the pair comparisons 214 may include a calculation of correlation based on the distance between two embeddings 210 such as using cosine similarity or another measure of distance between vectors such as Euclidean distance, Manhattan distance, Word Mover's Distance, etc.

In some embodiments, the pair comparisons 214 may be used by the AI module 208 to calculate weights 216 that may be applied to the features 206 of the dataset 202. For example, the AI module 208 may use one or more generative AI models and/or statistical analysis to calculate the weights 216 such that the weights 216 indicate the strength of the correlation between features 206. In some instances, the AI module 208 may use the pair comparisons 214 to generate weights 216 such that when the weights 216 are applied to the features 206, pairs of features 206 with the highest correlation are readily identifiable. For instance, weights 216 close to 1 may indicate high correlation whereas weights 216 close to 0 may indicate low correlation. In some embodiments, the set of pair comparisons 214 may include pairs where particular features are compared against themselves, which may result in a value of 1 being calculated as the weights 216 for such pair comparisons 214.

In some embodiments, the data encoding module 218 may be configured to generate an encoded dataset 220 by applying the weights 216 to the pair comparisons 214. For example, the data encoding module 218 may multiply correlation values corresponding to the pair comparisons 214 by their respective weights 216 and/or may organize the weights 216 to correspond to their respective pair comparisons 214. In some embodiments, the encoded dataset 220 may be an example of the encoded dataset 114 in FIG. 1 above.

In some embodiments, the encoded dataset 220 may be a compilation of pair comparisons 214 organized in a tabular format such that the weights 216 for each of the pair comparisons 214 correspond to a column for the first feature represented in a pair comparison and a row for the second feature represented in a pair comparison. In these and other embodiments, the encoded dataset 220 may be formatted to be readily used to train a ML model. For example, the encoded dataset 220 may be a heat map representation of the correlation between each of the features 206. For instance, the heat map representation may include color gradients (e.g., varying degrees of grayscale shading) that may be used to indicate levels of correlation.

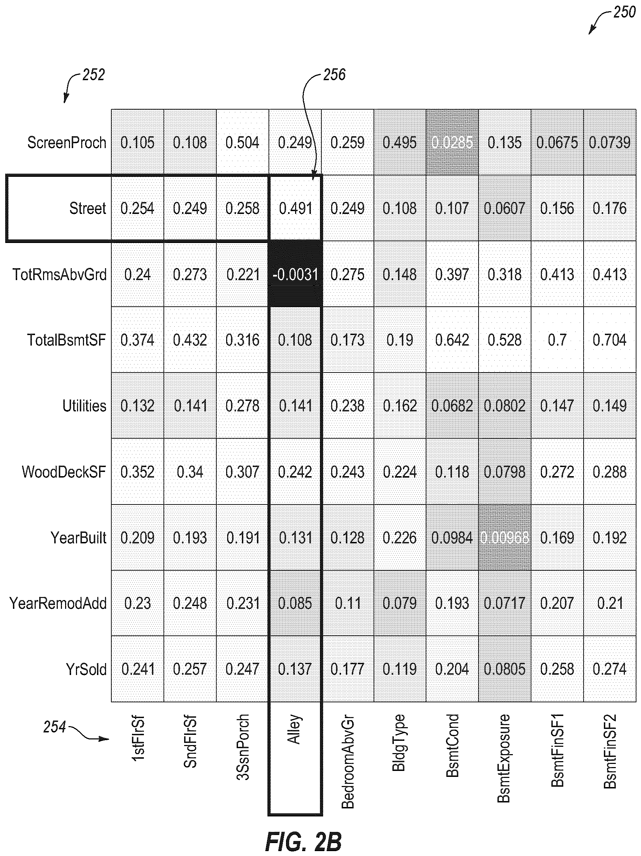

For instance, FIG. 2B illustrates an example heat map representation 250 of a dataset related to real estate data containing features including "ScreenPorch", "Street", "1stFlrSF", etc. By way of example, the features in the left row labels may each be considered a first feature 252 and the features in the bottom column labels may each be considered a second feature 254 such that each point of intersection within the heat map representation 250 may include a weight computed from the pair comparison 256 of the corresponding first feature 252 and corresponding second feature 254. As illustrated in FIG. 2B, the highlighted pair comparison 256 of the first feature 252 "Street" and the second feature 254 "Alley" is shown to contain the weight "0.491" and the color gradient is shown as a medium gray color further indicating that the features "Street" and "Alley" are fairly correlated (e.g., compare the black color of the pair comparison 256 for "TotRmsAbvGrd" and "Alley" (very low correlation) with the light gray color of the pair comparison 256 for "TotBsmtSF" and "BsmtFinSF2" (high correlation)).

Returning to FIG. 2A, the encoded dataset 220 may improve ML model training by allowing the weights 216 to be used in place of data corresponding to one or more features 206 in one or more additional datasets to which the ML model is applied. For example, using a dataset 202 where the weights 216 indicate the correlation between the features 206 may be used to assist a ML model such as a LLM to obtain consistent results even with different datasets (e.g., use different features that tend to categorize the same/similar data such as the features "Sodium", "Salt", "NaCl", and "Electrolyte"). A ML model trained using an encoded dataset 220 may be more efficient at processing such different datasets with different features by knowing that both "Sodium" and "Salt" may be highly correlated with another feature such as "Sugar" or a target variable such as "Calories". Additionally or alternatively, the encoded dataset 220 may be useful to training a ML model to be able to make accurate predictions on datasets with nondescriptive features since the ML model may be able to use the weights 216 to substitute for the missing information a descriptive feature may have supplied. For example, a ML model may be able to perform one or more downstream tasks such as target variable prediction or regression calculation based on the encoded dataset 220 even though the features are only "1", "2", "3", etc.

Modifications, additions, or omissions may be made to the system 200 without departing from the scope of the present disclosure. For example, in some embodiments, the system 200 may include any number of other components that may not be explicitly illustrated or described.

FIG. 3 illustrates an example process 300 configured to generate a target variable prediction 312 using an encoded dataset 302, in accordance with one or more embodiments of the present disclosure. In some embodiments, the process 300 may include a ML model training process 306 and/or an operation performing process 310.

In some embodiments, the encoded dataset 302 may be analogous or similar to the encoded dataset 114 in FIG. 1 above and/or the encoded dataset 220 in FIG. 2A above.

In some embodiments, the ML model training process 306 may include obtaining the encoded dataset 302 and the ML model 304 to generate a trained ML model 308. For example, the ML model training process 306 may include the ML model 304 learning the patterns and/or relationships between features in the encoded dataset 302 and one or more target variables. In some embodiments, the ML model 304 may be any type of ML model. For example, the ML model 304 may be a supervised learning model (e.g., regression model, classification model, tree-based model), an unsupervised learning model (e.g., clustering model), and/or a deep learning model (e.g., convolutional neural networks, recurrent neural networks, transformer models), among others.

In some embodiments, the ML model 304 may include one or more parameters that may be adjusted by the ML model training process 306. The adjustment may be a product of the ML model 304 learning from data inputted as part of the ML model training process 306, such as the encoded dataset 302. For example, the ML model 304 may be trained until the parameters result in predictions that satisfy a threshold (e.g., the predictions are determined to simulate actual outcomes to a desired level). Additionally or alternatively, the ML model training process 306 may include one or more hyperparameters. In some embodiments, the hyperparameters may be parameters of the ML model 304 that control the configuration settings and/or details of the ML model training process 306. For example, the hyperparameters may control the model architecture, learning rate, and/or any other aspect of the ML model training process 306. In these and other embodiments, the hyperparameters may be adjusted externally (e.g., by a user or through an automated technique such as grid search or random search) as compared to parameters that are adjusted internally as part of the ML model training process 306. In some embodiments, the hyperparameters may be used to adjust the overall behavior of the ML model 304 during the ML model training process 306. For example, hyperparameters determining the number of nodes and/or layers in a neural network may be used to adjust the model complexity of an ML model 304.

In some embodiments, at least one hyperparameter may be used for dropout regularization of the ML model 304, which may involve ignoring one or more parameters during the ML model training process 306 to prevent overfitting (e.g., a model giving accurate predictions for training data but not for new data). By way of example, the hyperparameter could be a masking weight threshold hyperparameter determining the probability of dropping out a weight such that in response to meeting a preset condition such as the weight not being greater than 0.1, the weight is dropped out during the ML model training process 306. In some instances, dropping out may be setting the weight that met the preset condition to have a value of zero. In some embodiments, adjusting the masking weight threshold hyperparameter may improve prediction performance of the ML model 304. For example, reducing the masking weight threshold hyperparameter may increase performance of predictions on datasets with descriptive features.

In some embodiments, after generating the trained ML model 308 using the ML model training process 306, the trained ML model 308 may be used to perform one or more operations. For example, the trained ML model 308 may perform one or more classification operations, regression operations, recognition operations, processing operations, etc. In some embodiments, the trained ML model 308 may perform one or more operations in an operation performing process 310 to generate a target variable prediction 312. For example, the target variable prediction 312 may include the trained ML model 308 generating a prediction of stock prices based on performing one or more regressions on a dataset.

In some embodiments, the operation performing process 310 using the trained ML model 308 may include obtaining at least one target variable prediction 312 using one or more inputs related to a dataset and a first threshold hyperparameter. In these and other embodiments, in response to the dataset including features being nondescriptive of the dataset, the operation performing process 310 may further include after obtaining the target variable prediction 312, using a second threshold hyperparameter lower than the first threshold hyperparameter to improve the target variable prediction 312. For example, the masking weight threshold hyperparameter may be adjusted from 0.5 to 0.3 in response to the trained ML model 308 obtaining a dataset with nondescriptive features after a first initial target variable prediction 312 generated was determined to be too inaccurate.

Modifications, additions, or omissions may be made to the process 300 without departing from the scope of the present disclosure. For example, in some embodiments, the process 300 may include any number of other components that may not be explicitly illustrated or described.

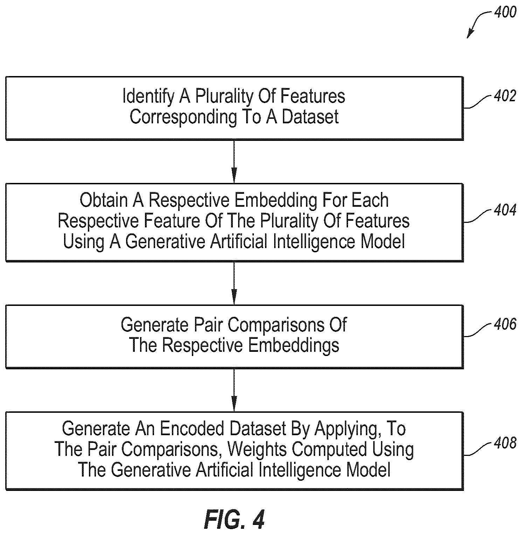

FIG. 4 is a flowchart of an example method 400 of encoding a dataset using generative AI, according to at least one embodiment described in the present disclosure. The method 400 may be performed by any suitable system. For example, the method 400 may be implemented using the system 200 of FIG. 2A and/or one or more operations of the method 400 may be performed by the system 200 of FIG. 2A. Additionally or alternatively, one or more operations of the method 400 may be performed by a computing system, such as that described with respect to FIG. 5. Although illustrated with discrete blocks, the steps and operations associated with one or more blocks of the method 400 may be divided into additional blocks, combined into fewer blocks, or eliminated, depending on the particular implementation.

The method 400 may include block 402. At block 402, multiple features corresponding to a dataset may be identified. The dataset 102 of FIG. 1 or the dataset 202 of FIG. 2A may be examples of the dataset. The features may be identified based on feature location within a dataset and/or data type. For example, the features may include text included in one or more headers related to the dataset. Additionally or alternatively, metadata and/or any other characteristic may be used to identify the features. In some embodiments, one or more of the features may be nondescriptive of the dataset. In some embodiments, one or more operations of the feature identification may include one or more operations described above with respect to the feature identification module 204.

At block 404, an embedding may be obtained for each respective feature of the features using a generative AI model. In some embodiments, the respective embedding for each respective feature of may include one or more of word embedding and/or contextual embedding. For instance, one or more embeddings may be a word and/or a contextual embedding representing the semantic similarity between the respective features as a vector representation. In some embodiments, one or more operations of the embedding may include one or more operations described above with respect to the AI module 208.

At block 406, pair comparisons of the respective embeddings may be generated. In some embodiments, the pair comparisons may be organized such that a generative AI model may utilize the pair comparisons. For example, the pair comparisons may each be a numerical vector representation corresponding to the correlation between two specific features. In some embodiments, one or more operations of the pair comparisons may include one or more operations described above with respect to the pair comparison module 212.

At block 408, an encoded dataset may be generated by applying, to the pair comparisons, weights computed using the generative AI model. For example, the generative AI model may be a pretrained generative AI model. In some embodiments, the weights may be computed using cosine similarity. In some embodiments, one or more operations of generating the encoded dataset may include one or more operations described above with respect to the data encoding module 218.

Modifications, additions, or omissions may be made to the method 400 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

For example, the method 400 may further include using the encoded dataset to train a ML model and performing one or more operations using the ML model. Additionally or alternatively, using the encoded dataset to train the ML model in method 400 may include using at least one hyperparameter that, in response to a weight of the weights meeting a preset condition, sets the weight to zero. In these and in other embodiments of the method 400, performing one or more operations using the ML model may include obtaining a prediction of one or more target variables using one or more inputs related to the dataset and a first threshold hyperparameter. Additionally or alternatively, in response to the plurality of features being nondescriptive of the dataset, the method 400 may further include, after obtaining the prediction of the one or more target variables, improving the prediction of the one or more target variables using a second threshold hyperparameter, wherein the second threshold hyperparameter is lower than the first threshold hyperparameter. In these and other embodiments, the first threshold hyperparameter and/or the second threshold hyperparameter may be fine-tuned/optimized based on the plurality of features (e.g., an optimized hyperparameter value may be based on whether a corresponding feature of the plurality of features is descriptive or nondescriptive of the dataset). For example, the method 400 may include optimizing a first threshold hyperparameter that is descriptive of the dataset such as "sq/ft".

FIG. 5 illustrates a block diagram of an example computing system according to one or more embodiments of the present disclosure. The computing system 500 may include a processor 502, a memory 504, a data storage 506, and/or a communication unit 508, which all may be communicatively coupled. For example, the modules of FIG. 2A may be implemented as a computing system consistent with the computing system 500.

Generally, the processor 502 may include any suitable special-purpose or general-purpose computer, computing entity, or processing device including various computer hardware or software modules and may be configured to execute instructions stored on any applicable computer-readable storage media. For example, the processor 502 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 5, it is understood that the processor 502 may include any number of processors distributed across any number of network or physical locations that are configured to perform individually or collectively any number of operations described in the present disclosure. In some embodiments, the processor 502 may interpret and/or execute program instructions and/or process data stored in the memory 504, the data storage 506, or the memory 504 and the data storage 506. In some embodiments, the processor 502 may fetch program instructions from the data storage 506 and load the program instructions into the memory 504.

After the program instructions are loaded into the memory 504, the processor 502 may execute the program instructions, such as instructions to cause the computing system 500 to perform some of the operations of the method 400 of FIG. 4. For example, the computing system 500 may execute program instructions to identify a plurality of features corresponding to a dataset.

The memory 504 and the data storage 506 may include computer-readable storage media or one or more computer-readable storage mediums for having computer-executable instructions or data structures stored thereon. Such computer-readable storage media may be any available media that may be accessed by a general-purpose or special-purpose computer, such as the processor 502. In some embodiments, the computing system 500 may or may not include either of the memory 504 and the data storage 506.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 502 to perform a particular operation or group of operations.

The communication unit 508 may include any component, device, system, or combination thereof that is configured to transmit or receive information over a network. In some embodiments, the communication unit 508 may communicate with other devices at other locations, the same location, or even other components within the same system. For example, the communication unit 508 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 508 may permit data to be exchanged with a network and/or any other devices or systems described in the present disclosure. For example, the communication unit 508 may allow the computing system 500 to communicate with other systems, such as computing devices and/or other networks.

One skilled in the art, after reviewing this disclosure, may recognize that modifications, additions, or omissions may be made to the computing system 500 without departing from the scope of the present disclosure. For example, the computing system 500 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and processes described herein are generally described as being implemented in software (stored on and/or executed by general purpose hardware), specific hardware implementations or a combination of software and specific hardware implementations are also possible and contemplated.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

Further embodiments of the present invention are as follows:
E1. A method comprising:
   identifying a plurality of features corresponding to a dataset;
   obtaining a respective embedding for each respective feature of the plurality of features using a pretrained generative artificial intelligence model;
   generating pair comparisons of the respective embeddings; and
   generating an encoded dataset by applying, to the pair comparisons, weights computed using the pretrained generative artificial intelligence model, wherein the weights indicate correlation between features in the pair comparisons.
E2. The method of embodiment 1, wherein the plurality of features include text included in one or more headers related to the dataset.
E3. The method of embodiment 1, wherein the respective embedding for each respective feature of the plurality of features includes one or more of word embedding or contextual embedding.
E4. The method of embodiment 1, wherein the weights are computed using cosine similarity.
E5. The method of embodiment 1, further comprising:
   using the encoded dataset to train a machine learning (ML) model; and
   performing one or more operations using the ML model.
E6. The method of embodiment 5, wherein using the encoded dataset to train the ML model further comprises using at least one hyperparameter that, in response to a weight of the weights meeting a preset condition, sets the weight to zero.
E7. The method of embodiment 5, wherein performing one or more operations using the ML model comprises obtaining a prediction of one or more target variables using one or more inputs related to the dataset and a first threshold hyperparameter.
E8. The method of embodiment 7, wherein, in response to the plurality of features being nondescriptive of the dataset, the method further comprises:
   after obtaining the prediction of the one or more target variables, improving the prediction of the one or more target variables using a second threshold hyperparameter, wherein the second threshold hyperparameter is lower than the first threshold hyperparameter.
E9. One or more non-transitory computer-readable media storing instructions that, when executed by one or more processors, cause a system to perform operations, the operations comprising:
   identifying a plurality of features corresponding to a dataset;
   obtaining a respective embedding for each respective feature of the plurality of features using a pretrained generative artificial intelligence model;
   generating pair comparisons of the respective embeddings; and
   generating an encoded dataset by applying, to the pair comparisons, weights computed using the pretrained generative artificial intelligence model, wherein the weights indicate correlation between features in the pair comparisons.
E10. The one or more non-transitory computer-readable media of embodiment 9, wherein the plurality of features include text included in one or more headers related to the dataset.
E11. The one or more non-transitory computer-readable media of embodiment 9, wherein the respective embedding for each respective feature of the plurality of features includes one or more of word embedding or contextual embedding.
E12. The one or more non-transitory computer-readable media of embodiment 9, wherein the weights are computed using cosine similarity.
E13. The one or more non-transitory computer-readable media of embodiment 9, wherein the plurality of features is determined to be nondescriptive of the dataset based on the weights satisfying a threshold.
E14. The one or more non-transitory computer-readable media of embodiment 9, further comprising:
   using the encoded dataset to train a machine learning (ML) model; and
   performing one or more operations using the ML model.
E15. The one or more non-transitory computer-readable media of embodiment 14, wherein performing one or more operations using the ML model comprises obtaining a prediction of one or more target variables using one or more inputs related to the dataset.
E16. A system comprising:
   one or more processors; and
   one or more non-transitory computer-readable storage media storing instructions that, in response to being executed by the one or more processors causes the system to perform operations, the operations comprising:
      identifying a plurality of features corresponding to a dataset;
      obtaining a respective embedding for each respective feature of the plurality of features using a pretrained generative artificial intelligence model;
      generating pair comparisons of the respective embeddings; and
      generating an encoded dataset by applying, to the pair comparisons, weights computed using the pretrained generative artificial intelligence model, wherein the weights indicate correlation between features in the pair comparisons.
E. 17 The system of embodiment 16, wherein the plurality of features include text included in one or more headers related to the dataset.
E18. The system of embodiment 16, wherein the plurality of features is determined to be nondescriptive of the dataset based on the weights satisfying a threshold.
E19. The system of embodiment 16, further comprising:
   using the encoded dataset to train a machine learning (ML) model; and
   performing one or more operations using the ML model.
E20. The system of embodiment 19, wherein performing one or more operations using the ML model comprises obtaining a prediction of one or more target variables using one or more inputs related to the dataset.

## Claims

1. A method comprising:
identifying a plurality of features corresponding to a dataset;
obtaining a respective embedding for each respective feature of the plurality of features using a pretrained generative artificial intelligence model;
generating pair comparisons of the respective embeddings; and
generating an encoded dataset by applying, to the pair comparisons, weights computed using the pretrained generative artificial intelligence model, wherein the weights indicate correlation between features in the pair comparisons.

2. The method of claim 1, wherein the plurality of features include text included in one or more headers related to the dataset.

3. The method of claim 1, wherein the respective embedding for each respective feature of the plurality of features includes one or more of word embedding or contextual embedding.

4. The method of claim 1, wherein the weights are computed using cosine similarity.

5. The method of claim 1, further comprising:
using the encoded dataset to train a machine learning (ML) model; and
performing one or more operations using the ML model.

6. The method of claim 5, wherein using the encoded dataset to train the ML model further comprises using at least one hyperparameter that, in response to a weight of the weights meeting a preset condition, sets the weight to zero.

7. The method of claim 5, wherein performing one or more operations using the ML model comprises obtaining a prediction of one or more target variables using one or more inputs related to the dataset and a first threshold hyperparameter.

8. The method of claim 7, wherein, in response to the plurality of features being nondescriptive of the dataset, the method further comprises:
after obtaining the prediction of the one or more target variables, improving the prediction of the one or more target variables using a second threshold hyperparameter, wherein the second threshold hyperparameter is lower than the first threshold hyperparameter.

9. One or more non-transitory computer-readable media storing instructions that, when executed by one or more processors, cause a system to perform operations, the operations comprising:
identifying a plurality of features corresponding to a dataset;
obtaining a respective embedding for each respective feature of the plurality of features using a pretrained generative artificial intelligence model;
generating pair comparisons of the respective embeddings; and
generating an encoded dataset by applying, to the pair comparisons, weights computed using the pretrained generative artificial intelligence model, wherein the weights indicate correlation between features in the pair comparisons.

10. The one or more non-transitory computer-readable media of claim 9, wherein the plurality of features is determined to be nondescriptive of the dataset based on the weights satisfying a threshold.

11. The one or more non-transitory computer-readable media of claim 14, wherein performing one or more operations using the ML model comprises obtaining a prediction of one or more target variables using one or more inputs related to the dataset.

12. A system comprising:
one or more processors; and
one or more non-transitory computer-readable storage media storing instructions that, in response to being executed by the one or more processors causes the system to perform operations, the operations comprising:
identifying a plurality of features corresponding to a dataset;
obtaining a respective embedding for each respective feature of the plurality of features using a pretrained generative artificial intelligence model;
generating pair comparisons of the respective embeddings; and
generating an encoded dataset by applying, to the pair comparisons, weights computed using the pretrained generative artificial intelligence model, wherein the weights indicate correlation between features in the pair comparisons.
